# EUROPÄISCHE PATENTANMELDUNG

(11) **EP 3 610 973 A1**
(43) Veröffentlichungstag der Anmeldung: **19.02.2020**
(21) Anmeldenummer: 18189124.3
(22) Anmeldetag: 15.08.2018
(51) Int. Cl.: B23B 31/18, B23B 33/00, B23B 31/36

(54) **VORRICHTUNG ZUM EINSPANNEN EINES ZU BEARBEITENDEN WERKSTÜCKES**

(71) Anmelder: SMW-Autoblok Spannsysteme GmbH, 88074 Meckenbeuren (DE)
(72) Erfinder: ECKHARD, Maurer, 88094 Oberteurigen (DE)
(74) Vertreter: Engelhardt, Volker

(57) **Zusammenfassung**

Es wird eine Vorrichtung (1) zum Einspannen eines zu bearbeitenden Werkstückes (2), insbesondere Spannfutter oder Schraubstock, vorgeschlagen:
- mit einem Futterkörper (3) und einem an diesem befestigten Antrieb (5),
- mit mindestens einer Spannbacke (6), die unmittelbar oder über Zwischenelemente (7) trieblich mit dem Antrieb (5) gekoppelt ist und die in Richtung des Werkstückes (2) bewegbar in oder an dem Futterkörper (3) gehalten ist oder sind,
bei welcher zum einen eine zuverlässige und zentrische Einspannung des Werkstückes (2) in einer vorgegebenen Position erreicht ist und zum anderen die Lagerung des Spannbackenträgers (9) an dem Futterkörper (3) während des Spannzustandes spielfrei ist, um jedwede Bewegungsmöglichkeit des Werkstückes (2) relativ zu dem Futterkörper (3) zu verhindern.

Dies ist dadurch erreicht, dass zwischen dem Futterkörper (3) und einen die jeweilige Spannbacke (6) aufnehmenden Spannbackenträger (9) ein Freiraum (11) vorgesehen ist,
dass in dem Freiraum (11) eine elastisch verformbare Hülse (12) eingesetzt ist, die an der Außenseite (8) des Futterkörpers (3) an zwei zueinander beabstandeten Positionen (21) aufliegt,
und dass zwischen dem Futterkörper (3), der Hülse (12) und deren beiden Auflage-Positionen (21) ein Druckraum (14) geschaffen ist, in den ein Medium (16) einfüllbar ist, durch das eine nach außen gerichtete Druckkraft auf die Wandung (W₂) der Hülse (12) einwirkt und diese in Richtung des Spannbackenträgers (9) zwischen den Auflage-Positionen (21) auswölbt.

## Beschreibung

Die Erfindung bezieht sich auf eine Vorrichtung zum Einspannen eines zu bearbeitenden Werkstückes nach dem Oberbegriff des Patentanspruchs 1.

Beispielsweise sind aus der EP 1 757 390 A1 oder aus anderen Spann-Vorrichtungen der konstruktive Aufbau derartiger Vorrichtungen zu entnehmen, durch die das zu bearbeitende Werkstück in einer vorgegebenen Position an einer Werkzeugmaschine oder deren Werkzeugtisch abzustützen ist, um entsprechende Bearbeitungskräfte auf das Werkstück einwirken zu lassen. Oftmals ist dabei das Werkstück in Rotation versetzt, so dass zusätzlich Fliehkräfte auftreten, die durch die Spann-Vorrichtung abzustützen sind. Demnach bestehen solche Spann-Vorrichtungen aus mindestens einem Spannbacken, der in Richtung eines feststehenden Anschlages axial verfahrbar ist, so dass das Werkstück zwischen der Spannbacke und dem Anschlag oder einer weiteren axial beweglichen Spannbacke festgesetzt werden kann. Bei Kraft-Spannfuttern sind mindestens drei bewegliche oder verschwenkbare Spannbacken vorzusehen, die in Richtung des Zentrums des Futterkörpers bzw. auf das zu bearbeitende Werkstück zubewegt sind, wodurch das Werkstück zwischen diesen Spannbacken verläuft und durch diese zentrisch im Raum gehalten ist.

Die Spannbacken sind dabei auf einem Spannbackenträger montiert, so dass die Spannbacken in Abhängigkeit von der Größe des einzuspannen Werkstückes oder dessen geometrischer Beschaffenheit ohne weiteres ausgetauscht werden können, um eine optimale Einspannsituation zu erreichen. Der Spannbackenträger ist entweder unmittelbar oder über Zwischenelemente mit einem Antrieb, beispielsweise in Form einer Spindel oder eines Elektromotors, verbunden und bewegt sich somit relativ zu einem den Backenträger abstützenden Futterkörper. Der Antrieb ist fest mit dem Futterkörper verbunden.

Bei solchen Spann-Vorrichtungen hat es sich gezeigt, dass die Abstützung des Werkstückes bezogen auf die Längsachse des Futterkörpers und/oder von Bearbeitungsachsen der Werkzeugmaschine von entscheidender Relevanz ist, da jede Abweichung oder Auslenkung des Werkstückes aus einer vorgegebenen Ist-Position dazu führt, dass Herstellungsfehler an dem Werkstück auftreten. Insbesondere bei Präzisionswerkstücken ist es jedoch zwingend erforderlich, diese Herstellungsfehler möglichst gering zu halten sind. Gleichwohl herrscht bei den bekannten Spann-Vorrichtungen zwischen dem Spannbackenträger und dem Futterkörper ein montagebedingtes Spiel vor, so dass die auftretenden Bearbeitungskräfte sowie die möglicherweise vorhandenen Fliehkräfte eine geringfügige Bewegung des Werkstückes bewirken. Folglich entstehen Herstellungsfehler.

Der Erfindung liegt daher die Aufgabe zugrunde, eine Vorrichtung der eingangs genannten Gattung derart weiterzubilden, dass zum einen eine zuverlässige und zentrische Einspannung des Werkstückes in einer vorgegebenen Position erreicht ist und dass zum anderen die Lagerung des Spannbackenträgers an dem Futterkörper während des Spannzustandes spielfrei ist, um jedwede Bewegungsmöglichkeit des Werkstückes relativ zu dem Futterkörper zu verhindern.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen dem Futterkörper und einen die jeweilige Spannbacke aufnehmende Spannbackenträger ein Freiraum vorgesehen ist, dass in dem Freiraum eine elastisch verformbare Hülse eingesetzt ist, die an der Außenseite des Futterkörpers an zwei zueinander beabstandeten Positionen aufliegt, und dass zwischen dem Futterkörper, der Hülse und deren beiden Auflage-Positionen ein Druckraum geschaffen ist, in den ein Medium einfüllbar ist, durch das eine nach außen gerichtete Druckkraft auf die Wandung der Hülse einwirkt und diese in Richtung des Spannbackenträgers zwischen den Auflage-Positionen auswölbt, ist eine spielfreie Lagerung des Werkstückes an dem Futterkörper erreicht, so dass während des Spannungszustandes, also während des Bearbeitungsvorganges, die auftretenden Kräfte vollständig aufgenommen und abgestützt sind, um jedwede Bewegungsmöglichkeit des Werkstückes relativ zu dem Futterkörper auszuschließen.

Da die Befüllung des Druckraumes erfolgt, nachdem das Werkstück mithilfe der Spannbacken zentriert im Raum gehalten ist, kann das zwischen dem Spannbackenträger und dem Futterkörper vorhandene Lagerspiel oder sonstige durch bauseits bedingte Luftspalte zwischen diesen beiden Bauteilen vollständig ausgeglichen sein. Die Hülse drückt nämlich den Spannbackenträger nach außen, so dass dieser gegen den Spannbackenträger gepresst ist. Eine solche Auswölbung der Hülse erfolgt schnell und kann zu jedem Zeitpunkt durch Abschalten der Pumpe gestoppt sein, so dass durch die Menge des eingepressten Mediums die nach außen wirkende Kraft einstellbar ist.

Zwischen den Spannbacken und dem Backenträger ist üblicherweise kein Spiel vorhanden, da die Positionierung der Spannbacken an dem Spannbackenträger mithilfe von Bolzen, Führungsnuten oder sonstigen toleranzfreien Bauteilpaarungen erreicht ist.

Wenn demnach der Spannbackenträger spielfrei an dem Futterkörper festgesetzt ist, entstehen an dem Werkstück während des Bearbeitungsvorganges keine Relativbewegungen, so dass das Werkstück in der vorgegebenen Einspannposition dauerhaft ausgerichtet ist. Dies führt vorteilhafterweise dazu, dass der Bearbeitungsvorgang hochpräzise durchgeführt werden kann, wodurch für sämtliche bearbeitete Werkstücke, die eine identische Geometrie aufweisen, dies ohne Fehlerabweichungen erreicht werden kann.

Bei der Hülse handelt es sich um ein elastisch verformbares Bauteil. Die Elastizität der Hülse in einem bestimmten Bereich ist dadurch gewährleistet, dass zwei zueinander beanstandete Positionen der Hülse eine wesentlich dickere Wandstärke aufweisen als die dazwischen verlaufende Wandung der Hülse, so dass die vom Druckraum auf die Hülse einwirkenden Druckkräfte eine Auswölbung der dünneren Wandung der Hülse bewirken, wohingegen die Hülse im dickeren Wandungsbereich eine Auflageposition auf dem Futterkörper hat und dort keine Auswölbungen erfährt.

Ein axiales Verrutschen der Hülse wird durch einen Deckel verhindert, durch den demnach die Hülse nach deren Montage lageorientiert an dem Futterkörper gehalten ist und ausschließlich eine Auswölbung in Richtung des Spannbackenträgers stattfindet.

In der Zeichnung ist eine erfindungsgemäße Vorrichtung dargestellt, die nachfolgend näher erläutert ist. Im Einzelnen zeigt:
- Figur 1: eine Vorrichtung zum Einspannen eines Werkstückes, bestehend aus einem Futterkörper, in dem ein Antrieb vorgesehen ist, durch den ein Spannbackenträger und an diesem befestigten Spannbacken in Richtung des Werkstückes bewegbar sind, im Schnitt und im Ausgangszustand,
- Figur 2: die Vorrichtung gemäß Figur 1, im Spannzustand des Werkstückes,
- Figur 3a: eine Detailansicht aus Figur 1 und
- Figur 3b: eine Detailansicht aus Figur 2.

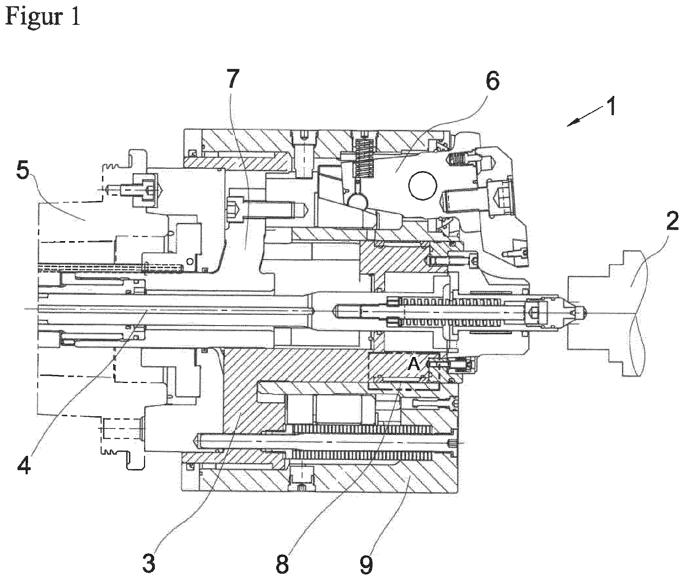

Die in Figur 1 abgebildete Vorrichtung 1 dient dazu, ein zu bearbeitendes Werkstück 2 lageorientiert und in einer vorgegebenen Position im Raum einzuspannen. Die Vorrichtung 1 kann als Spannfutter oder als Schraubstock ausgestaltet sein. Die von einer Werkzeugmaschine aufgebrachten Bearbeitungskräfte oder auf das Werkstück 2 einwirkende Fliehkräfte sind durch die Vorrichtung 1 abzustützen.

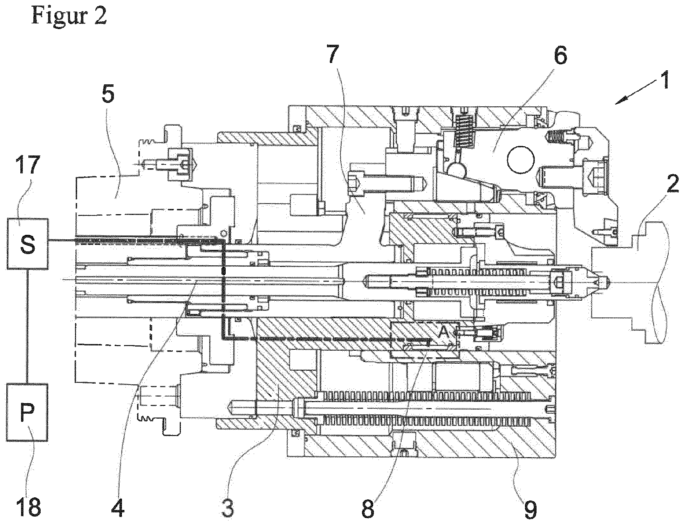

Die Vorrichtung 1 besteht aus einem Futterkörper 3, das eine mit der Bezugsziffer 4 gekennzeichnete Längsachse aufweist. In dem Futterkörper 3 ist ein Antrieb 5, beispielsweise in Form eines Spindeltriebes, eingebaut, mit denen ein in Richtung des Werkstückes 2 bewegbarer Spannbackenträger 9 trieblich gekoppelt ist. Der Antrieb 5 wirkt dabei auf einen Betätigungskolben 7, der trieblich mit dem Spannbackenträger 9 gekoppelt ist. An dem Spannbackenträger 9 sind drei Spannbacken 6 montiert, so dass bei der Betätigung des Kolbens 7 sowohl der Backenträger 9 als auch die daran befestigten Spannbacken 6 aus der Ausgangslage gemäß Figur 1 in die Spannposition gemäß Figur 2 überführt sind, also dass die Spannbacken 6 in Richtung des Werkstückes 2 bewegt sind und dieses nach der Beendigung des Spannvorganges im Raum zentriert abstützen.

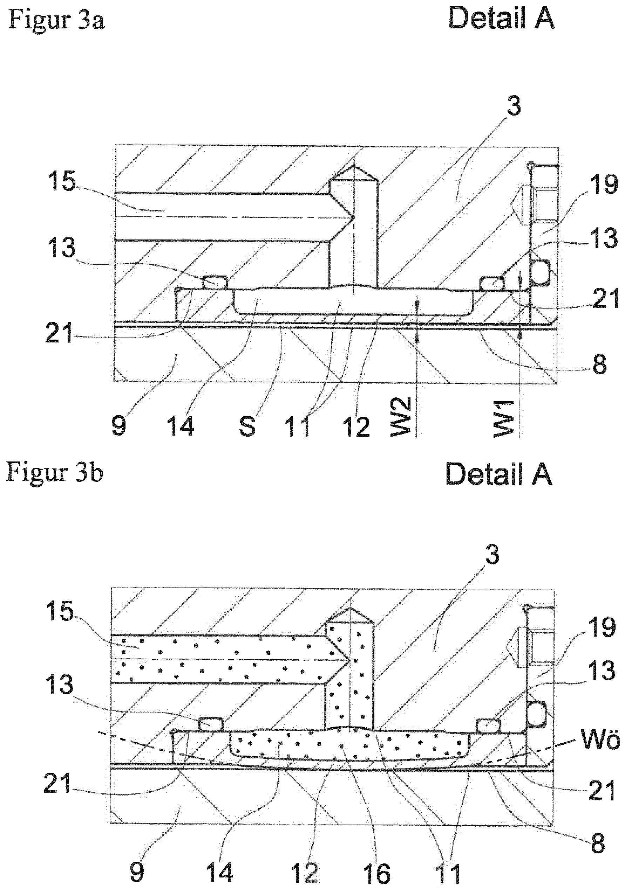

Aus den Figuren 3a und 3b ist erkennbar, dass in dem Futterkörper 3 ein Freiraum 11 eingearbeitet ist, der zwischen dem Futterkörper 3 und den Spannbackenträger 9 verläuft. Zudem ist in dem Futterkörper 3 ein Kanal 15 eingearbeitet, der sowohl in den Freiraum 11 als auch mit einem externen Vorratsspeicher 17 verbunden ist. In dem Vorratsspeicher 17 ist ein Medium 15 gelagert, das durch eine Pumpe 18 aus diesem in den Kanal 15 eingepresst werden kann.

Um ein Austreten des Mediums 15 aus dem Freiraum 11 zu verhindern, ist in diesem eine elastisch verformbare Hülse 12 eingesetzt. Die Hülse 12 weist zwei unterschiedlich dick bemessene Wandstärken W₁ und W₂ auf. Die dickere Wandstärke W₁ ist dabei jeweils einer Auflageposition 21 zwischen der Hülse 12 und dem Futterkörper 3 zugeordnet. Zwischen den beiden Auflage-Positionen 21, die voneinander beanstandet sind, verläuft die Hülse 12 mit der kleineren Wandstärke W₂. Die Hülse 12 kann aus einem metallischen Werkstoff, aus Kunststoff oder aus einem Gewebe dieser beiden Materialien hergestellt sein. Um den Freiraum 11 zwischen der Hülse 12 und dem Futterkörper 3 wasser- oder gasdicht abzudichten, sind zwei O-Ring-Dichtungen 13 vorgesehen. Folglich bilden die O-Ring-Dichtungen 13 die Hülse 12 und der Futterkörper 3 einen Druckraum 14, der flüssigkeits- oder gasdicht nach außen verschlossen ist. Der Kanal 15 mündet in den Druckraum 14, so dass das Medium 16 durch die Pumpe 18 aus dem Vorratsspeicher 17 in den Druckraum 14 eingepresst werden kann

Während des Spannvorganges ist der Druckraum 14 gemäß Figur 3a vollständig entleert. Erst wenn der Spannvorgang beendet ist, presst die Pumpe 18 das Medium 16 durch den Kanal 15 in den Druckraum 14. Durch das Medium 16 entsteht eine in Richtung des Spannbackenträgers 9 wirkende Auslenkkraft, durch die die Wandstärke W₂ der Hülse 12 in Richtung des Spannbackenträgers 9 ausgewählt ist. Die Auswölbung gemäß Figur 3b der Hülse 12 ist schematisch als Wö gekennzeichnet. Diese Auswölbungen WÖ hat demnach bei einem rotationssymmetrischen Futterkörper 3 eine t-förmige oder bogenförmige Außenkontur. Aufgrund der vorherrschenden Auswölbung WÖ der Hülse 12 entsteht eine auf den Spannbackenträger 9 gerichtete Kraft, durch die der Spannbackenträger 9 spielfrei in den Futterkörper 3 eingepresst ist. Die Auswölbung WÖ der Hülse 12 soll demnach während des Bearbeitungsvorganges permanent vorhanden sein, um den Spannbackenträger 9 spielfrei festzusetzen, so dass die auftretenden Bearbeitungskräfte derart abgestützt sind, dass die vorgegebene Einspannposition des Werkstückes 2 dauerhaft beibehalten ist.

Nach Beendigung des Bearbeitungsvorganges wird der Druckraum 14 entleert, das Medium 16 wird also durch den Kanal 15 von der Pumpe 18 in den Vorratsspeicher 17 zurückgezogen. Das Medium 16 kann dabei ein Hydrauliköl oder ein Gasgemisch sein.

Um ein axiales Verrutschen der Hülse 12 zu verhindern, ist diese mittels eines Deckels 19 an dem Futterkörper 3, beispielsweise über eine Schrauben-GewindeVerbindung, gehalten.

Die erfindungsgemäße Idee kann auf sämtliche Spannfutter oder Spann-Vorrichtungen 1 übertragen sein, die Bauteile aufweisen, die außerhalb des Kraftflusses ein Spiel 5 aufweisen. Der Kraftfluss bewirkt während des Spannzustandes, dass die Bauteile festgesetzt sind. Wenn die relativ zueinander beweglichen Bauteile ein Spiel zueinander haben, das außerhalb des Kraftflusses liegt, dann besteht zwischen diesen das Spiel. Mittels der Hülse 12 kann demnach eine zusätzliche Kraft zur Verfügung gestellt sein, deren Verlauf außerhalb des vorhandenen durch den Spannvorgang erzeugten Kraftfluss verläuft.

## Patentansprüche

1. Vorrichtung (1) zum Einspannen eines zu bearbeitenden Werkstückes (2), insbesondere Spannfutter oder Schraubstock,
- mit einem Futterkörper (3) und einem an diesem befestigten Antrieb (5),
- mit mindestens einer Spannbacke (6), die unmittelbar oder über Zwischenelemente (7) trieblich mit dem Antrieb (5) gekoppelt ist und die in Richtung des Werkstückes (2) bewegbar in oder an dem Futterkörper (3) gehalten ist oder sind,
**dadurch gekennzeichnet,**
**dass** zwischen dem Futterkörper (3) und einen die jeweilige Spannbacke (6) aufnehmenden Spannbackenträger (9) ein Freiraum (11) vorgesehen ist,
**dass** in dem Freiraum (11) eine elastisch verformbare Hülse (12) eingesetzt ist, die an der Außenseite (8) des Futterkörpers (3) an zwei zueinander beabstandeten Positionen (21) aufliegt,
und **dass** zwischen dem Futterkörper (3), der Hülse (12) und deren beiden Auflage-Positionen (21) ein Druckraum (14) geschaffen ist, in den ein Medium (16) einfüllbar ist, durch das eine nach außen gerichtete Druckkraft auf die Wandung (W₂) der Hülse (12) einwirkt und diese in Richtung des Spannbackenträgers (9) zwischen den Auflage-Positionen (21) auswölbt.

2. Vorrichtung nach Anspruch 1,
**dadurch gekennzeichnet,**
**dass** die Wandstärke (W₁) der Hülse (12) im Bereich der beiden Auflage-Positionen (21) wesentlich dicker ist als die Wandstärke (W₂) der Hülse (12) zwischen den beiden Auflage-Positionen (21).

3. Vorrichtung nach einem der vorgenannten Ansprüche,
**dadurch gekennzeichnet,**
**dass** der jeweilige Spannbackenträger (9) mit einem vorgegebenen Spiel (S) in oder an dem Futterkörper (3) gehalten ist und dass durch die Auswölbung (Wö) der Hülse (12) der Spannbackenträger (9) während des Spannzustandes spielfrei mit dem Futterkörper (3) verbunden oder verklemmt ist.

4. Vorrichtung nach einem der vorgenannten Ansprüche,
**dadurch gekennzeichnet,**
**dass** in dem Futterkörper (3) ein Kanal (15) eingearbeitet ist, der in den Druckraum (14) mündet,
**dass** an dem Futterkörper (3) oder extern ein mit dem Medium (16) gefüllter Vorratsspeicher (17) vorgesehen ist, der mit dem Kanal (15) verbunden ist,
und **dass** mittels einer Pumpe (18) das Medium (16) aus dem Vorratsspeicher (17) in den Druckraum (14) gepresst ist und vice versa.

5. Vorrichtung nach einem der vorgenannten Ansprüche,
**dadurch gekennzeichnet,**
**dass** die Hülse (12) aus einem metallischen Werkstoff, aus Kunststoff oder einem Gewebe aus diesen Materialien hergestellt ist.

6. Vorrichtung nach einem der vorgenannten Ansprüche,
**dadurch gekennzeichnet,**
**dass** die Hülse (12) mittels eines Deckels (19) an dem Futterkörper (3) festgesetzt bzw. gehalten ist.

7. Vorrichtung nach einem der vorgenannten Ansprüche,
**dadurch gekennzeichnet,**
**dass** zwischen die Hülse (12) und dem Druckraum (14) zwei O-Ring-Dichtungen (13) eingesetzt sind, die durch diese flüssigkeits- und gasdicht verschlossen ist.

8. Vorrichtung nach einem der vorgenannten Ansprüche,
**dadurch gekennzeichnet,**
**dass** jeweils eine O-Ring-Dichtung (13) im Bereich der Auflage-Positionen (21) der Hülse (12) an dem Futterkörper (3) angeordnet ist.

9. Vorrichtung nach einem der vorgenannten Ansprüche,
**dadurch gekennzeichnet,**
**dass** die Bewegungen der jeweiligen Spannbacken (6) bzw. des Spannbackenträgers (9) und die Auswölbung (WÖ) der Hülse (12) voneinander getrennt sind.
